# EUROPEAN PATENT APPLICATION

(11) **EP 4 401 216 A1**
(43) Date of publication of application: **17.07.2024**
(21) Application number: 23791005.4
(22) Date of filing: 30.03.2023
(51) Int. Cl.: H01M 50/231

(54) **BATTERY AND ELECTRICAL DEVICE**

(30) Priority: 21.04.2022 CN 202210423355
(71) Applicant: Contemporary Amperex Technology Co., Limited, Ningde, Fujian 352100 (CN)
(72) Inventor: XU, Endong, Ningde, Fujian 352100 (CN); LI, Ting, Ningde, Fujian 352100 (CN); XIAO, Zhiwei, Ningde, Fujian 352100 (CN); NIU, Shaojun, Ningde, Fujian 352100 (CN); JIN, Haizu, Ningde, Fujian 352100 (CN)
(74) Representative: von Tietzen und Hennig, Nikolaus
(86) International application number: PCT/CN2023/085205
(87) International publication number: WO 2023/202348

(57) **Abstract**

Some embodiments of this application disclose a battery and an electrical device. The battery includes: a battery cell, where a pressure relief mechanism is disposed on a first wall of the battery cell; and a protection plate, where the protection plate is disposed opposite to the pressure relief mechanism. The protection plate is a polymer-based composite fiberboard. The technical solution provided in this application can protect a box of the battery from airflow impact and high-temperature melting arising from thermal runaway of the battery, thereby enhancing safety performance of the battery.

## Description

### CROSS-REFERENCE TO RELATED APPLICATIONS

This application claims priority to Chinese Patent Application No. 202210423355.6, filed on April 21, 2022 and entitled "BATTERY AND ELECTRICAL DEVICE", which is incorporated herein by reference in its entirety.

### TECHNICAL FIELD

This application relates to the technical field of batteries, and in particular, to a battery and an electrical device.

### BACKGROUND

Energy conservation and emission reduction are key to sustainable development of the automobile industry. For this reason, electric vehicles have become an important part of the sustainable development of the automobile industry by virtue of energy saving and environmental friendliness. Battery technology is crucial to the development of electric vehicles.

In the development of battery technology, safety is a non-negligible issue in addition to improvement of battery performance. If the safety of a battery is not guaranteed, the battery is not suitable for use. Therefore, how to enhance the safety of the battery is an urgent technical issue in the battery technology.

### SUMMARY

In view of the above problems, some embodiments of this application provide a battery and an electrical device to protect the box of the battery from airflow impact and high-temperature melting arising from thermal runaway of the battery, and in turn, enhance safety performance of the battery.

According to a first aspect, a battery is provided, including: a battery cell, where a pressure relief mechanism is disposed on a first wall of the battery cell; and a protection plate, where the protection plate is disposed opposite to the pressure relief mechanism. The protection plate is a polymer-based composite fiberboard.

In an embodiment of this application, the battery includes a battery cell. A pressure relief mechanism configured to protect the battery cell is disposed on the first wall of the battery cell. The battery further includes a protection plate. The protection plate is disposed opposite to the pressure relief mechanism. In other words, the protection plate faces the pressure relief mechanism directly. The protection plate is a polymer-based composite fiberboard, and can withstand high temperature and impact. With the pressure relief mechanism disposed opposite to the protection plate, when the battery cell is thermally runaway, the protection plate made of the polymer-based composite fiber can block the high-temperature and high-speed gas-solid mixture released by the pressure relief mechanism, protect the box of the battery from airflow impact and high-temperature melting, and ensure safety of the battery.

In a possible embodiment, the polymer-based composite fiberboard is a fiber-reinforced resin composite board.

In this embodiment of this application, the fiber-reinforced resin composite board is made as a protection plate by using the resin in the polymer material as a matrix. The fiber-reinforced resin composite boards is more resistant to high temperature and impact than other polymer material matrices.

In a possible embodiment, the battery cell is accommodated in a box. The first wall is a wall of the battery cell, the wall being close to a top cap of the box and disposed opposite to the top cap.

In this embodiment of this application, when the first wall is a wall, close to the top cap of the box and opposite to the top cap, of the battery cell, the pressure relief mechanism faces the top cap. The protection plate is disposed opposite to the pressure relief mechanism, that is, the protection plate is disposed near the top cap. When the battery cell is thermally runaway, the protection plate made of the polymer-based composite fiber can block the high-temperature and high-speed gas-solid mixture released by the pressure relief mechanism, and protect the top cap of the battery from airflow impact and high-temperature melting.

In a possible embodiment, the protection plate is integrated with the top cap.

In this embodiment, the protection plate is integrated with the top cap. The protection plate and the top cap may be used together as the top cap of the battery, or the protection plate may be used alone as the top cap of the battery. When the protection plate and the top cap are used together as the top cap of the battery, the protection plate protects the top cap, and in turn, more effectively protects the battery. When the protection plate alone serves as the top cap of the battery, the protection plate makes the structure of the top cap of the battery simpler while protecting the top cap of the battery from high temperature and airflow impact at the same time.

In a possible embodiment, the protection plate is disposed between the top cap and the first wall.

In this embodiment, the protection plate is disposed between the top cap and the first wall, that is, the protection plate is disposed between the top cap and the pressure relief mechanism. In this way, the protection plate can directly protect the top cap from high temperature and airflow impact, thereby enhancing the safety performance of the battery.

In a possible embodiment, the protection plate is identical to the top cap in dimensions.

In this embodiment of this application, the protection plate is disposed between the top cap and the first wall. When the protection plate is identical to the top cap in dimensions, the protection plate not only protects the top cap from the high temperature and high-speed gas-solid mixture released by the pressure relief mechanism, but also improves the effect of sealing inside the battery. In addition, the same dimensions between the protection plate and the top cap also facilitate assembling and reduce the difficulty of assembling.

In a possible embodiment, the protection plate is smaller than the top cap in dimensions.

In this embodiment of this application, the protection plate is disposed between the top cap and the first wall. When the protection plate is smaller than the top cap in dimensions, the protection plate can protect the top cap on the one hand and reduce the cost on the other hand.

In a possible embodiment, the protection plate is in a strip shape. A projection of the protection plate on the first wall covers the pressure relief mechanism.

In this embodiment of this application, the protection plate is disposed between the top cap and the first wall. When the protection plate is in a strip shape and the projection thereof on the first wall covers the pressure relief mechanism, the protection plate can maintain a good protective effect on the top cap on the one hand, and on the other hand can maximally reduce cost and avoid waste of materials outside the protected region.

In a possible embodiment, the protection plate is connected to the top cap by a bolt or adhesive.

In this embodiment of this application, the connection between the protection plate and the top cap is implemented by a bolt or adhesive. This connection manner is simple to implement, highly operable, and widely applicable in production.

In a possible embodiment, the battery cell is accommodated in a box. The first wall is a wall of the battery cell, the wall being close to a bottom wall of the box and disposed opposite to the bottom wall.

In this embodiment of this application, when the first wall is a wall, close to the bottom wall of the box and opposite to the bottom wall, of the battery cell, the pressure relief mechanism faces the bottom wall. The protection plate is disposed opposite to the pressure relief mechanism, that is, the protection plate is disposed near the bottom wall. When thermal runaway occurs in the battery cell, the protection plate made of the polymer-based composite fiber can block the high-temperature and high-speed gas-solid mixture released by the pressure relief mechanism, and protect the bottom wall of the battery from airflow impact and high-temperature melting.

In a possible embodiment, the protection plate is integrated with the bottom wall of the box.

In this embodiment, the protection plate is integrated with the bottom wall. The protection plate and the bottom wall may be used together as the bottom wall of the battery, or the protection plate may be used alone as the bottom wall of the battery. When the protection plate and the bottom wall are used together as the bottom wall of the battery, the protection plate protects the bottom wall, and in turn, more effectively protects the battery. When the protection plate alone serves as the bottom wall of the battery, the protection plate makes the structure of the bottom wall of the battery simpler while protecting the bottom wall of the battery from high temperature and airflow impact at the same time.

In a possible embodiment, the protection plate is disposed between the bottom wall and the first wall.

In this embodiment, the protection plate is disposed between the bottom wall and the first wall, that is, the protection plate is disposed between the bottom wall and the pressure relief mechanism. In this way, the protection plate can directly protect the bottom wall from high temperature and airflow impact, thereby ensuring high safety performance of the battery.

In a possible embodiment, a thermal management component is disposed between the protection plate and the first wall. The thermal management component is configured to accommodate a fluid to regulate temperature for the battery cell.

In this embodiment of this application, the protection plate is disposed between the first wall and the box of the battery, or the protection plate is directly used as the box of the battery, so as to protect the box of the battery from high temperature and airflow impact, and in turn, enhance the safety performance of the battery. The thermal management component that regulates the temperature of the battery cell is disposed between the first wall and the protection plate, so that the temperature of the battery cell can be regulated according to actual needs of the battery cell, thereby ensuring normal operation of the battery cell.

In a possible embodiment, the thermal management component includes a fragile region disposed opposite to the pressure relief mechanism. The fragile region is configured to be broken by emissions of the battery cell when the pressure relief mechanism is actuated, so as to let the emissions pass through the fragile region.

In this embodiment of this application, the protection plate is disposed between the first wall and the box of the battery, or the protection plate is directly used as the box of the battery to protect the box of the battery. The thermal management component disposed between the first wall and the protection plate can regulate the temperature of the battery cell according to actual needs of the battery cell, thereby ensuring normal operation of the battery cell. The fragile region is disposed on the thermal management component. Therefore, when the fragile region is broken by airflow impact or high temperature, the emissions can be quickly exhausted away from the battery cell through the fragile region, thereby reducing the danger of the emissions to the battery, and in turn, enhancing the safety performance of the battery.

In a possible embodiment, a heat insulation component is disposed between the protection plate and the box.

In this embodiment of this application, the protection plate added between the first wall fitted with the pressure relief mechanism and the box can protect the box of the battery from high temperature and high-speed airflow impact. The heat insulation component additionally disposed between the protection plate and the box can further reduce the temperature of the box and further enhance the safety performance of the battery.

In a possible embodiment, the heat insulation component is an air interlayer.

In this embodiment of this application, the air interlayer is disposed as a heat insulation component between the protection plate and the box, thereby further reducing the temperature of the box and enhancing the safety performance of the battery.

In a possible embodiment, the protection plate includes a plurality of fiber-reinforced resin layers. Each of the fiber-reinforced resin layers is compounded of a fiber material and a resin material.

In this embodiment of this application, the fiber-reinforced resin is a material resistant to high temperature and impact. By using the protection plate made of this material and disposing the protection plate between the pressure relief mechanism and the box, the protection plate can protect the box when the high temperature and emissions inside the battery cell burst out of the battery cell, thereby protecting the box from the impact of high-temperature melting and high-speed emissions, and in turn, protecting the battery.

In a possible embodiment, the resin material is silicon-based aerogel modified resin or high-temperature-resistant flame-retardant resin.

In this embodiment of this application, the material compounded of fiber and resin is resistant to high temperature and impact. The two types of materials, that is, the silicon-based aerogel modified resin or the high-temperature-resistant flame-retardant resin, can further improve the capabilities of the protection plate in withstanding high temperature and impact.

In a possible embodiment, the fiber material is at least one of glass fiber, ceramic fiber, carbon fiber, quartz fiber, high silica fiber, aluminum silicate fiber, mullite fiber, silicon carbide fiber, silicon nitride fiber, alumina fiber, boron nitride fiber, basalt fiber, brucite fiber, attapulgite fiber, boron fiber, carbon nanotube fiber, aramid fiber, polyimide fiber, ultra-high molecular weight polyethylene fiber, and other fibers.

In a possible embodiment, the fiber material is a ceramic fiber material.

In this embodiment of this application, the material compounded of fiber and resin is resistant to high temperature and impact. The ceramic fiber material is superior to other fiber materials in terms of high-temperature resistance.

In a possible embodiment, the ceramic fiber material is silicon oxide or aluminum oxide.

In this embodiment of this application, the protection plate prepared from silicon oxide or aluminum oxide is of the highest resistance to high temperature.

In a possible embodiment, a thickness of the fiber material is 6 µm to 100 µm.

In this embodiment of this application, the fiber material of 6 µm to 100 µm in thickness is adopted, thereby not only making the protection plate resistant to high temperature and impact, but also reducing production cost.

In a possible embodiment, a thickness of the protection plate is 0.2 mm to 5 mm.

In this embodiment of this application, the fiber material of 0.2 mm to 5 mm in thickness is adopted, thereby not only making the protection plate resistant to high temperature and impact, but also reducing production cost.

According to a second aspect, this application provides an electrical device. The electrical device includes the battery disclosed in any one of the preceding embodiments. The battery is configured to provide electrical energy.

### BRIEF DESCRIPTION OF DRAWINGS

FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic structural exploded view of a battery according to another embodiment of this application;
FIG. 5 is a half-sectional schematic structural diagram of a box of a battery according to an embodiment of this application;
FIG. 6 is a schematic diagram of a top cap of a battery according to an embodiment of this application;
FIG. 7 is a schematic structural exploded view of a battery according to still another embodiment of this application;
FIG. 8 is a schematic structural exploded view of a battery according to still another embodiment of this application;
FIG. 9 is a schematic structural exploded view of a bottom wall of a battery according to an embodiment of this application;
FIG. 10 is a half-sectional schematic structural diagram of a box of a battery according to another embodiment of this application;
FIG. 11 is a schematic structural exploded view of a bottom wall of a battery according to another embodiment of this application; and
FIG. 12 is a schematic structural diagram of a fiber-reinforced resin layer according to an embodiment of this application.

List of reference numerals:
vehicle 1, battery 2, battery cell 6; protection plate 8;
box 20, electrode assembly 61, shell 62, electrode terminal 63, connecting member 64, pressure relief mechanism 65, thermal management component 66, heat insulation component 67, fiber-reinforced resin layer 81, fiber material layer 811, fiber pore 812;
first box portion/top cap 201, second box portion/bottom wall 202, accommodation space 203, housing 621, end cap 622, positive electrode terminal 631, negative electrode terminal 632, fragile region 661.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In this application, battery cells may include a lithium metal battery, a sodium metal battery, a magnesium metal battery, or the like. The type of the battery cell is not limited herein. The battery cell may be in various shapes such as a cylinder, a flat body, or another shape. The shape of the battery cell is not limited herein. In terms of the packaging form, the battery cell is typically classed into three types: cylindrical battery cell, prismatic battery cell, and pouch-type battery cell. The type of the battery cell is not limited herein. For ease of description in the following embodiments, a lithium metal battery is used as an example.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

In new energy battery electric vehicles, a battery box as an energy source is mounted in the vehicle. The battery in the battery box discharges to drive an electric motor of the new energy vehicle to run. With the requirements on new energy vehicles being increasingly higher, people are expecting a higher energy density of a battery. For a high-energy battery system with a negative electrode doped with silicon, when one or more battery cells in the battery system are thermally runaway, the temperature of the resulting gas may be higher than 1500 °C. When the maximum speed of the gas is greater than the speed of sound, the aerogel-based thermal insulation materials in the prior art are no longer able to obstruct the temperature impact and airflow impact of such high-temperature and high-speed airflow. Therefore, the aerogel-based thermal insulation material will be thermally and mechanically disintegrated in structure, resulting in protection failure. The high-temperature and high-speed airflow bursts through the box of a battery pack, and results in direct combustion of the box of the battery made of a steel sheet with a melting point of 1500 °C. The combustion continues for approximately 30 seconds when the main body of the new energy vehicle is destroyed directly, thereby endangering the passengers.

To solve the above problem, an embodiment of this application provides a technical solution. The technical solution is to dispose a protection plate in a battery pack box. The protection plate material can obstruct the high-temperature and high-speed gas-solid mixture arising from thermal runaway of the battery, protect the box of the battery from airflow impact and high-temperature melting, and in turn, improve safety performance of the battery.

The protection plate disclosed in an embodiment of this application is applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

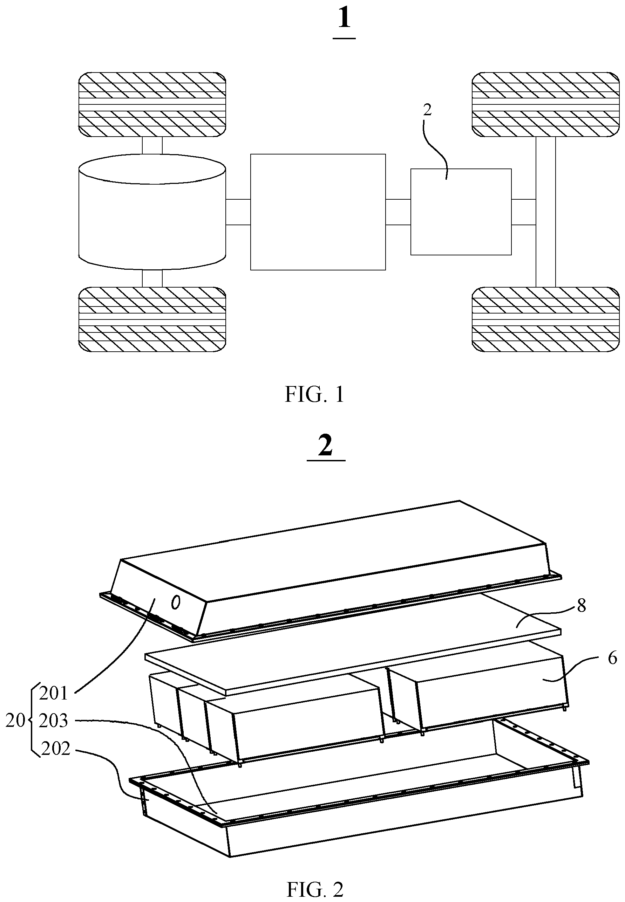

FIG. 1 is a schematic structural diagram of a vehicle 1 according to an embodiment of this application. As shown in FIG. 1, a battery 2 is disposed inside the vehicle 1. The battery 2 may be disposed at the bottom, front, or rear of the vehicle 1. The battery 2 may be configured to supply power to the vehicle 1. For example, the battery 2 may serve as an operating power supply of the vehicle 1.

FIG. 2 is a schematic exploded view of a battery 2 according to an embodiment of this application. As shown in FIG. 2, the battery 2 includes a box 20, a battery cell 6, and a protection plate 8. The battery cell 6 and the protection plate 8 are accommodated in the box 20.

The box 20 is configured to accommodate the battery cell 6. The box 20 may be in diverse structures. In some embodiments, the box 20 may include a first box portion 201 and a second box portion 202. The first box portion 201 and the second box portion 202 fit each other. The first box portion 201 and the second box portion 202 together define an accommodation space 203 configured to accommodate the battery cell 6. The second box portion 202 may be a hollow structure opened at one end. The first box portion 201 is a plate structure. The first box portion 201 fits and covers the opening of the second box portion 202 to form the box 20 that includes the accommodation space 203. Alternatively, the first box portion 201 and the second box portion 202 each may be a hollow structure opened at one end. The opening of the first box portion 201 fits the opening of the second box portion 202 to form the box 20 that includes the accommodation space 203. Definitely, the first box portion 201 and the second box portion 202 may be in various shapes, such as a cylinder or a cuboid.

To improve airtightness between the first box portion 201 and the second box portion 202 that are connected, a sealing element such as a sealant or a sealing ring may be disposed between the first box portion 201 and the second box portion 202.

Assuming that the first box portion 201 fits on the top of the second box portion 202, the first box portion 201 is also be referred to as a top cap, and the second box portion 202 is also referred to as a bottom wall.

There may be a plurality of battery cells 6 in the battery 2. The plurality of battery cells 6 may be connected in series, parallel, or series-and-parallel pattern. The series-and-parallel pattern means a combination of series connection and parallel connection of the plurality of battery cells 6. The plurality of battery cells 6 may be directly connected in series, parallel, or series-and-parallel pattern, and then the whole of the plurality of battery cells 6 may be accommodated in the box 20. Alternatively, the plurality of battery cells 6 may be connected in series, parallel, or series-and-parallel pattern to form a battery module (not shown in the drawing) first. A plurality of battery modules are then connected in series, parallel, or series-and-parallel pattern to form a whole for being accommodated in the box 20. The plurality of battery cells 6 in the battery module may be electrically connected by a busbar component, so as to implement parallel, series, or series-and-parallel connection between the plurality of battery cells 6 in the battery module.

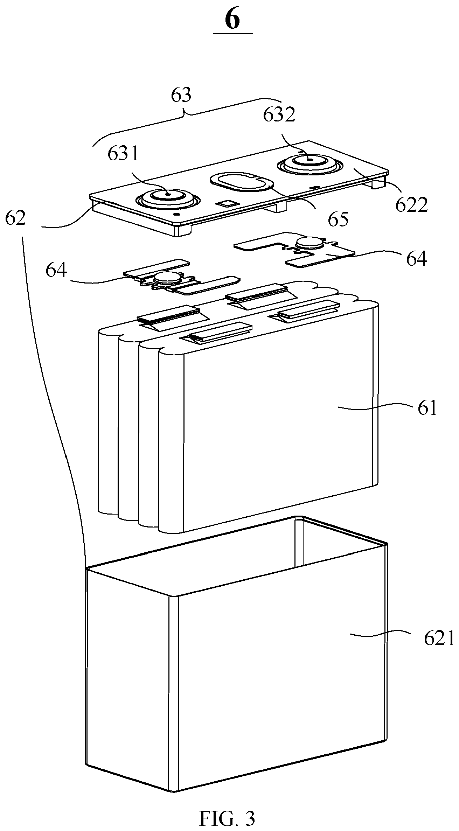

FIG. 3 is a schematic structural diagram of a battery cell 6 according to an embodiment of this application. As shown in FIG. 3, the battery cell 6 includes one or more electrode assemblies 61, a housing 621, and an end cap 622. The housing 621 and the end cap 622 form a shell or a battery case 62. Both the wall of the housing 621 and the end cap 622 are referred to as walls of the battery cell 6. For a cuboidal battery cell 6, the walls of the housing 621 include a bottom wall and four sidewalls. The shape of the housing 621 is determined depending on the shape of a combination of one or more electrode assemblies 61. For example, the housing 621 may be a hollow cuboid or cube or cylinder. One surface of the housing 621 is provided with an opening through which one or more electrode assemblies 61 can be placed into the housing 621 conveniently. For example, when the housing 621 is a hollow cuboid or cube, one of faces of the housing 621 is an opened face. The opened face is not walled so that the inside of the housing 621 communicates with the outside. When the housing 621 is a hollow cylinder, an end face of the housing 621 may be an opened face. That is, this end face is not walled so that the inside of the housing 621 communicates with the outside. The end cap 622 covers the opening and is connected to the housing 621 to form a closed cavity that is configured to accommodate the electrode assembly 61. The housing 621 is filled with an electrolyte such as an electrolytic solution.

The battery cell 6 may further include two electrode terminals 63. The two electrode terminals 63 may be disposed on the end cap 622. The end cap 622 is generally in the shape of a flat plate. Two electrode terminals 63 are fixed onto a flat surface of the end cap 622. The two electrode terminals 63 are a positive electrode terminal 631 and a negative electrode terminal 632 respectively. A connecting member 64, also referred to as a current collection component 64, is disposed corresponding to each electrode terminal 63, located between the end cap 622 and the electrode assembly 61, and configured to electrically connect the electrode assembly 61 and the electrode terminal 63.

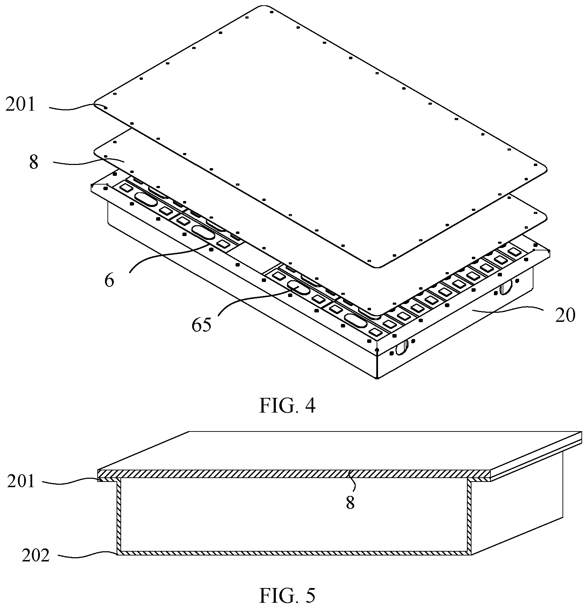

In the battery cell 6, one or more electrode assemblies 61 may be disposed depending on actual use requirements. As shown in FIG. 3, 4 independent electrode assemblies 61 are disposed in the battery cell 6.

A pressure relief mechanism 65 may be disposed on the battery cell 6. The pressure relief mechanism 65 is configured to be actuated to relieve an internal pressure or temperature when the internal pressure or temperature of the battery cell 6 reaches a threshold.

FIG. 4 is a schematic structural exploded view of a battery according to another embodiment of this application. As shown in FIG. 4, the battery 2 includes: a battery cell 6, where a pressure relief mechanism 65 is disposed on a first wall of the battery cell 6; and a protection plate 8, where the protection plate 8 is disposed opposite to the pressure relief mechanism 65. The protection plate 8 is a polymer-based composite fiberboard.

In this embodiment of this application, the pressure relief mechanism 65 is a structural component that is actuated to release pressure inside the battery cell 6 when an internal pressure or temperature of the battery cell 6 reaches a threshold. For example, the pressure relief mechanism 65 may be a temperature-sensitive pressure relief mechanism. The temperature-sensitive pressure relief mechanism is configured to melt when the internal temperature of the battery cell 6 equipped with the pressure relief mechanism 65 reaches a threshold; and/or, the pressure relief mechanism 65 may be a pressure-sensitive pressure relief mechanism. The pressure-sensitive pressure relief mechanism is configured to rupture when the internal air pressure of the battery cell 6 equipped with the pressure relief mechanism 65 reaches a threshold. The type of the pressure relief mechanism is not particularly limited in any way herein.

The battery 2 includes a battery cell 6. A pressure relief mechanism 65 configured to protect the battery cell 6 is disposed on the first wall of the battery cell 6. The battery 2 further includes a protection plate 8. The protection plate 8 is disposed opposite to the pressure relief mechanism 65. In other words, the protection plate 8 faces the pressure relief mechanism 65 directly. The protection plate 8 is a polymer-based composite fiberboard, and can withstand high temperature and impact.

In the above technical solution, with the pressure relief mechanism 65 disposed opposite to the pressure relief mechanism 65, when thermal runaway occurs in the battery cell 6, the protection plate 8 made of the polymer-based composite fiber can block the high-temperature and high-speed gas-solid mixture released by the pressure relief mechanism 65, protect the battery shell from airflow impact and high-temperature melting, and ensure safety of the battery 2.

Optionally, the polymer-based composite fiberboard is a fiber-reinforced resin composite board.

In the above technical solution, the fiber-reinforced resin composite board is made as a protection plate 8 by using the resin in the polymer material as a matrix. The fiber-reinforced resin composite boards is more resistant to high temperature and impact than other polymer material matrices.

Optionally, as shown in FIG. 4, the battery cell 6 is accommodated in a box 20. The first wall is a wall of the battery cell 6, the wall being close to a top cap 201 of the box 20 and disposed opposite to the top cap 201.

When the first wall is a wall, close to the top cap 201 of the box 20 and opposite to the top cap 201, of the battery cell 6, the pressure relief mechanism 65 is close and oriented to the top cap 201.

In the above technical solution, the protection plate 8 is disposed between the pressure relief mechanism 65 and the top cap 201. When the battery cell 6 is thermally runaway and the pressure relief mechanism 65 releases the temperature and pressure inside the battery cell 6, the protection plate 8 made of the polymer-based composite fiber can block the high-temperature and high-speed gas-solid mixture released by the pressure relief mechanism 65, and protect the top cap 201 of the battery 2 from airflow impact and high-temperature melting, and in turn, protect the battery 2.

FIG. 5 is a half-sectional schematic structural diagram of a box of a battery according to an embodiment of this application. As shown in FIG. 5, optionally, the protection plate 8 is integrated with the top cap 201.

With the protection plate 8 integrated with the top cap 201, the protection plate 8 and the top cap 201 may be used together as the top cap 201 of the battery 2. Alternatively, the protection plate 8 may be used alone as the top cap 201 of the battery 2, as shown in FIG. 5.

In the above technical solution, when the protection plate 8 and the top cap 201 are used together as the top cap 201 of the battery 2, the top cap 201 of the battery 2 assumes a two-layer structure, and the protection plate 8 protects the top cap 201, thereby more effectively protecting the battery 2. When the protection plate 8 alone serves as the top cap 201 of the battery 2, the protection plate 8 not only protects the top cap 201 of the battery 2 from high temperature and airflow impact, but also makes the structure of the battery 2 simpler, thereby reducing the production cost of the battery 2.

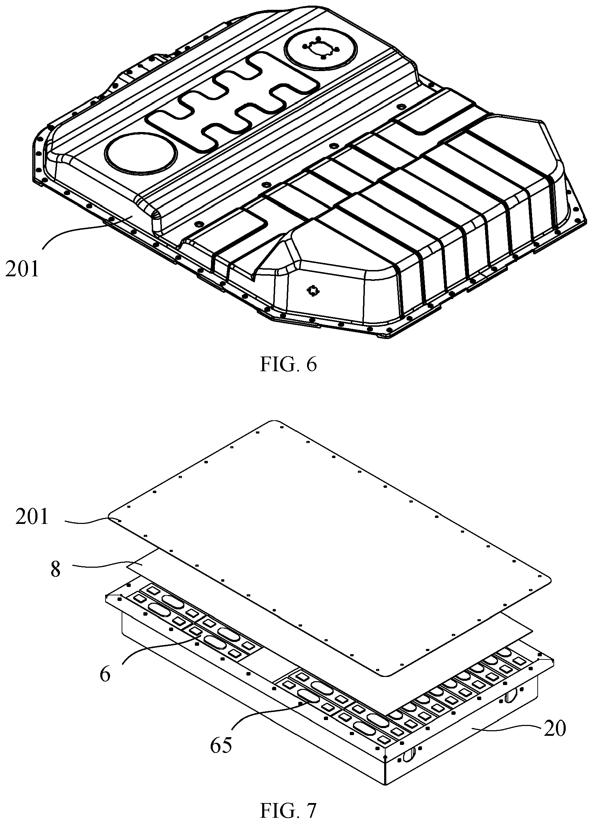

FIG. 6 is a schematic diagram of a top cap according to an embodiment of this application. As shown in FIG. 6, when the protection plate 8 is integrated with the top cap 201, the top cap 201 may be in an irregular shape. In this embodiment of this application, the top cap 201 may be square, circular, or in another shape. The shape is not particularly limited herein. In other words, during the production, the top cap 201 and protection plate 8 may be manufactured in any shape according to specific product needs.

Optionally, as shown in FIG. 4, the protection plate 8 is disposed between the top cap 201 and the first wall.

The protection plate 8 being disposed between the top cap 201 and the first wall means that the pressure relief mechanism 65 faces the top cap 201, and the protection plate 8 is disposed between the top cap 201 and the pressure relief mechanism 65.

In the above technical solution, the protection plate 8 is disposed between the top cap 201 and the pressure relief mechanism 65, and the pressure relief mechanism 65 faces the top cap 201. In this way, the protection plate 8 can directly protect the top cap 201 so that the top cap 201 directly facing the pressure relief mechanism 65 is protected from high temperature and airflow impact, thereby ensuring safety of the battery 2.

Still referring to FIG. 4, optionally, the protection plate 8 is identical to the top cap 201 in dimensions.

The protection plate 8 is disposed between the top cap 201 and the pressure relief mechanism 65 and the protection plate 8 is identical to the top cap 201 in dimensions, so that the protection plate 8 can protect the top cap 201 more comprehensively.

In the above technical solution, when the protection plate 8 is disposed between the top cap 201 and the pressure relief mechanism 65 and the protection plate 8 is identical to the top cap 201 in dimensions, the protection plate 8 not only protects the top cap 201 more comprehensively and shields the top cap 201 from the high temperature and high-speed gas-solid mixture released by the pressure relief mechanism 65, but also improves the effect of sealing inside the battery 2. In addition, the same dimensions between the protection plate 8 and the top cap 201 also facilitate assembling and reduce the difficulty of assembling.

FIG. 7 is a schematic structural exploded view of a battery according to still another embodiment of this application. As shown in FIG. 7, optionally, the protection plate 8 is smaller than the top cap 201 in dimensions.

In the above technical solution, the protection plate 8 is disposed between the top cap 201 and the first wall on which a pressure relief mechanism 65 is disposed. When the protection plate 8 is smaller than the top cap 201 in dimensions, the protection plate 8 can protect the top cap 201 to improve the safety performance of the battery 2 on the one hand, and reduce the production cost on the other hand.

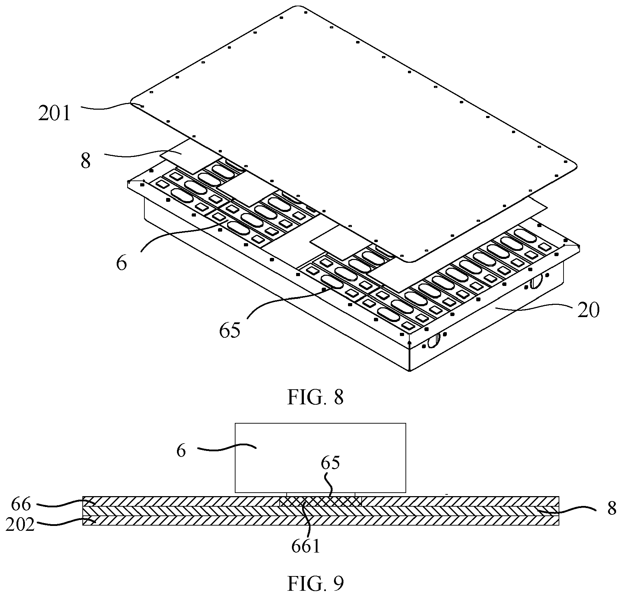

FIG. 8 is a schematic structural exploded view of a battery according to still another embodiment of this application. As shown in FIG. 8, optionally, the protection plate 8 is in a strip shape. A projection of the protection plate 8 on the first wall covers the pressure relief mechanism 65.

The shape of the protection plate 8 may be a strip shape shown in FIG. 8, or may be circular or any other shape. The shape of the protection plate 8 is not limited herein as long as the projection of the protection plate 8 on the first wall covers the pressure relief mechanism 65 and the protection plate serves a function of protecting the box of the battery 2.

In the above technical solution, the protection plate 8 is disposed between the top cap 201 and the first wall. When the protection plate 8 is in a strip shape and the projection thereof on the first wall covers the pressure relief mechanism 65, the protection plate 8 can maintain a good protective effect on the top cap 201 on the one hand, and on the other hand can maximally reduce cost and avoid waste of materials outside the protected region.

Optionally, the protection plate 8 is connected to the top cap 201 by a bolt or adhesive.

The protection plate 8 may be connected to the top cap 201 in many different ways as long as they are fastened to each other. This connection manner is not limited herein. However, in the actual production process, selecting a convenient and operable connection manner is conducive to popularization in practical applications.

In the above technical solution, the connection between the protection plate 8 and the top cap 201 is implemented by a bolt or adhesive. This connection manner is simple to implement, highly operable, and widely applicable in production.

FIG. 9 is a schematic structural diagram of a bottom wall of a battery according to an embodiment of this application. As shown in FIG. 9, optionally, the battery cell 6 is accommodated in a box 20. The first wall is a wall of the battery cell 6, the wall being close to a bottom wall 202 of the box 20 and disposed opposite to the bottom wall 202.

When the first wall is a wall, close to the bottom wall 202 of the box 20 and opposite to the bottom wall 202, of the battery cell 6, the pressure relief mechanism 65 is close and oriented to the bottom wall 202.

In the above technical solution, the protection plate 8 is disposed between the pressure relief mechanism 65 and the bottom wall 202. When the battery cell 6 is thermally runaway and the pressure relief mechanism 65 releases the temperature and pressure inside the battery cell 6, the protection plate 8 made of the polymer-based composite fiber can block the high-temperature and high-speed gas-solid mixture released by the pressure relief mechanism 65, and protect the bottom wall 202 of the battery 2 from airflow impact and high-temperature melting, and in turn, protect the battery 2.

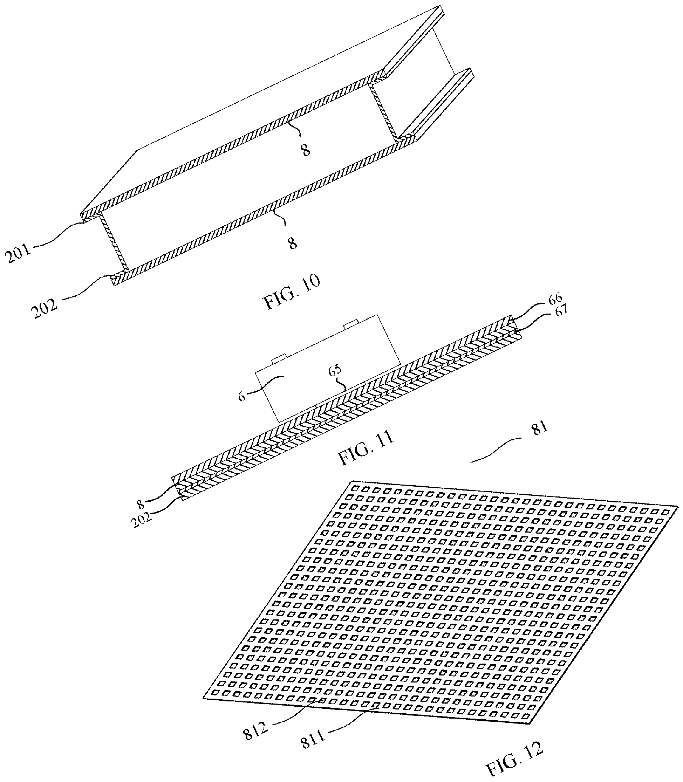

FIG. 10 is a half-sectional schematic structural diagram of a box of a battery according to another embodiment of this application. As shown in FIG. 10, optionally, the protection plate 8 is integrated with the bottom wall 202.

With the protection plate 8 integrated with the bottom wall 202, the protection plate 8 and the bottom wall 202 may be used together as the bottom wall 202 of the battery 2. Alternatively, the protection plate 8 may be used alone as the bottom wall 202 of the battery 2, as shown in FIG. 10.

In the above technical solution, when the protection plate 8 and the bottom wall 202 are used together as the bottom wall 202 of the battery 2, the bottom wall 202 of the battery 2 assumes a two-layer structure, and the protection plate 8 protects the bottom wall 202, thereby more effectively protecting the battery 2. When the protection plate 8 alone serves as the bottom wall 202 of the battery 2, the protection plate 8 not only protects the bottom wall 202 of the battery 2 from high temperature and airflow impact, but also makes the structure of the battery 2 simpler, thereby reducing the production cost of the battery 2.

When the pressure relief mechanism 65 inside the battery 2 faces only the top cap 201, the protection plate 8 is integrated with the top cap 201 to protect the battery 2. When the pressure relief mechanism 65 faces only the bottom wall 202, the protection plate 8 is integrated with the bottom wall 202 to protect the battery 2. When the pressure relief mechanism 65 inside the battery 2 faces both the top cap 201 and the bottom wall 202, as shown in FIG. 10, the protection plate 8 may be disposed on both the top cap 201 and the bottom wall 202. This application does not specifically limit the arrangement of the protection plate 8 in the battery 2 as long as the protection plate 8 exists on the wall directly facing the pressure relief mechanism 65 of the battery cell 6 in the battery 2. In other words, the protection plate 8 may be a top cap 201, a bottom wall 202, or a sidewall. Alternatively, the protection plate 8 may be a crossbeam in the battery 2. The specific position of the protection plate 8 may be changed depending on the arrangement position of the battery cell 6 in the battery 2, or may be any position in the battery 2 as required in practical applications.

Optionally, as shown in FIG. 9, the protection plate 8 is disposed between the bottom wall 202 and the first wall.

The protection plate 8 being disposed between the bottom wall 202 and the first wall means that the pressure relief mechanism 65 faces the bottom wall 202, and the protection plate 8 is disposed between the bottom wall 202 and the pressure relief mechanism 65.

In the above technical solution, the protection plate 8 is disposed between the bottom wall 202 and the pressure relief mechanism 65, and the pressure relief mechanism 65 faces the top cap 201. In this way, the protection plate 8 can directly protect the bottom wall 202 so that the bottom wall 202 directly facing the pressure relief mechanism 65 is protected from high temperature and airflow impact, thereby ensuring safety of the battery 2.

Optionally, as shown in FIG. 9, a thermal management component 66 is disposed between the protection plate 8 and the first wall. The thermal management component 66 is configured to accommodate a fluid to regulate temperature for the battery cell 6.

The thermal management component 66 is configured to accommodate a fluid to regulate temperature for battery cells 6. The fluid here may be a liquid or gas, and the temperature regulation means heating or cooling the battery cells 6. In a case of cooling down or lowering the temperature of the battery cells 6, the thermal management component 66 is configured to accommodate the cooling fluid to lower the temperature of the battery cells 6. In this case, the thermal management component 66 is also referred to as a cooling component, a cooling system, a cooling plate, or the like. The fluid accommodated in the thermal management component is also referred to as a cooling medium or a cooling fluid, and more specifically, referred to as a cooling liquid or a cooling gas. In addition, the thermal management component 66 may be further configured to heat up and raise the temperature of the battery cells 6. The use of the thermal management component is not limited herein. Optionally, the fluid may circulate in order to achieve a better effect of temperature regulation. Optionally, the fluid may be water, a mixture of water and ethylene glycol, air, or the like.

In the above technical solution, the protection plate 8 is disposed between the first wall and the box of the battery 2, or the protection plate 8 is directly used as the box of the battery 2, so as to protect the box of the battery 2 from high temperature and airflow impact, and in turn, protect the battery 2. The thermal management component that regulates temperature of the battery cell 6 is disposed between the first wall and the protection plate 8, so that the temperature of the battery cell 6 can be regulated as required by the battery cell 6, thereby ensuring normal operation of the battery cell 6.

Optionally, the thermal management component 66 includes a fragile region 661 disposed opposite to the pressure relief mechanism 65. The fragile region 661 is configured to be broken by emissions of the battery cell 6 when the pressure relief mechanism 65 is actuated, so as to let the emissions pass through the fragile region 661.

The fragile region 661 may be any configuration easily breakable by the emissions, and the configuration of the fragile region is not limited herein.

The thermal management component 66 may include a fluid flow channel formed of a thermal material. The fluid flows in the flow channel, and conducts heat through the thermal material to regulate the temperature of the battery cell 6. In this embodiment of this application, the fragile region 661 may include only a thermal material but without a fluid, so as to form a relatively thin thermal material layer, and make the fragile region more easily breakable by the emissions. For example, a side, close to the bottom wall 202, of the fragile region 661, may be a thermal material layer to form the fragile region 661.

In the above technical solution, the protection plate 8 is disposed between the first wall and the box of the battery 2, or the protection plate 8 is directly used as the box of the battery 2 to protect the battery 2. The thermal management component 66 disposed between the first wall and the protection plate 8 can regulate the temperature of the battery cell 6 according to actual needs of the battery cell 6, so as to ensure normal operation of the battery cell 6. The fragile region 661 is disposed on the thermal management component 66. Therefore, when the fragile region 661 is broken by airflow impact or high temperature, the emissions can be quickly exhausted away from the battery cell 6 through the fragile region 661, thereby reducing the danger of the emissions to the battery 2, and in turn, enhancing the safety performance of the battery 2.

FIG. 11 is a schematic structural exploded view of a bottom wall of a battery according to another embodiment of this application. As shown in FIG. 11, in an embodiment of this application, a heat insulation component 67 is disposed between the protection plate 8 and the box 20.

In the technical solution above, the protection plate 8 added between the first wall fitted with the pressure relief mechanism 65 and the box 20 can protect the box 20 of the battery 2 from high temperature and high-speed airflow impact. The heat insulation component 67 additionally disposed between the protection plate 8 and the box 20 can further reduce the temperature of the box 20 and protect the battery 2.

Optionally, the air component 67 is an air interlayer.

The purpose of adding the heat insulation component 67 is to further reduce the temperature of the box 20. Using an air interlayer as the heat insulation component 67 can greatly reduce the heat transfer from inside the battery 2 to the box 20, and the heat insulation effect is significant.

In the technical solution above, the air interlayer is disposed as a heat insulation component 67 between the protection plate 8 and the box 20, thereby further reducing the temperature of the box 20 and enhancing the safety performance of the battery 2.

FIG. 12 is a schematic structural diagram of a fiber-reinforced resin layer according to an embodiment of this application. As shown in FIG. 12, optionally, the protection plate 8 includes a plurality of fiber-reinforced resin layers 81. Each of the fiber-reinforced resin layers 81 is compounded of a fiber material and a resin material.

The process of compounding the fiber material and the resin material is not limited herein. An exemplary compounding process is: immersing a single fiber material layer 811 in a resin material slurry, making the resin material slurry fully infiltrate fiber pores 812 in the single fiber material layer 811, and then baking the material at a temperature of 60 °C to 120 °C for 3 to 30 minutes to obtain a fiber-reinforced resin layer 81. Laminating 1 to 20 fiber-reinforced resin layers 81, and hot-pressing the laminate at a pressure of 0.1 MPa to 10 MPa and a temperature of 100 °C to 200 °C to form a protection plate 8.

The method for preparing the resin material slurry is not limited herein. An exemplary method in an embodiment of this application is: mixing an aqueous elastic coating material, a resin material, a flame retardant, a dispersant, a coupling agent, silica powder, and short fibers at a mass ratio (35 to 55): (15 to 34): (15 to 20): (1 to 3): (0.5 to 3): (1 to 3): (0.5 to 3) to make up a resin material slurry.

The fiber-reinforced resin material in this embodiment of this application is a dark brown material that exhibits good acid resistance, good mechanical properties, and good heat resistance. Even at very high temperatures, the material maintains structural integrity and stability, and is widely applicable in anti-corrosion products, adhesives, and flame retardants.

In the technical solution above, the fiber-reinforced resin is a material resistant to high temperature and impact. By using the protection plate 8 made of this material and disposing the protection plate 8 between the pressure relief mechanism 65 and the box 20, the protection plate 8 can protect the box 20 when the high temperature and emissions inside the battery cell 6 burst out of the battery cell 6, thereby protecting the box 20 from the impact of high-temperature melting and high-speed emissions, and in turn, protecting the battery 2.

Optionally, the resin material is silicon-based aerogel modified resin or high-temperature-resistant flame-retardant resin.

The resin material in this embodiment of this application may be silicon-based aerogel modified resin or high-temperature-resistant flame-retardant resin.

In the technical solution above, the material compounded of fiber and resin is resistant to high temperature and impact. The two types of materials, that is, the silicon-based aerogel modified resin or the high-temperature-resistant flame-retardant resin, can further improve the capabilities of the protection plate 8 in withstanding high temperature and impact.

Optionally, the fiber material may be at least one of glass fiber, carbon fiber, quartz fiber, high silica fiber, aluminum silicate fiber, mullite fiber, silicon carbide fiber, silicon nitride fiber, alumina fiber, boron nitride fiber, basalt fiber, brucite fiber, attapulgite fiber, boron fiber, carbon nanotubes, aramid fiber, polyimide fiber, ultra-high molecular weight polyethylene fiber, and other fibers.

Optionally, the fiber material is a ceramic fiber material.

In this embodiment of this application, the ceramic fiber is superior to many other fiber materials in terms of high-temperature-resistant performance.

In the technical solution above, the material compounded of fiber and resin is resistant to high temperature and impact. The ceramic fiber material is superior to other fiber materials in terms of high-temperature resistance.

Optionally, the ceramic fiber material is silicon oxide or aluminum oxide.

In the technical solution above, the protection plate 8 prepared from silicon oxide or aluminum oxide is of the highest resistance to high temperature.

Optionally, the thickness of the fiber material is 6 µm to 100 µm.

In the technical solution above, the fiber material of 6 µm to 100 µm in thickness is adopted, thereby not only making the protection plate 8 resistant to high temperature and impact, but also reducing production cost.

Optionally, the thickness of the protection plate 8 is 0.2 mm to 5 mm.

In the technical solution above, the protection plate 8 of 0.2 mm to 5 mm in thickness is adopted, thereby not only making the protection plate 8 resistant to high temperature and impact, but also reducing production cost.

An embodiment of this application further provides an electrical device. The electrical device includes the battery 2 disclosed in the preceding embodiment. The battery 2 is configured to provide electrical energy.

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment.

The protection plates made of the fiber-reinforced resin material is subjected to a tensile test, with the test results being shown in Table 1; a compression test, with the test results being shown in Table 2; a flexure test, with the test results being shown in Table 3; a short beam shear test, with the test results being shown in Table 4; and an impact test, with the test results being shown in Table 5.

**Table 1 Tensile test for protection plates of different thicknesses**

| Serial number | Maximum force (N) | | Tensile strength (MPa) | |
|---|---|---|---|---|
| | 3 mm sheet material | 3 mm sheet material | 2 mm sheet material | 0.5 mm sheet material |
| 1 | 7754.87 | 103.40 | 132.84 | 119.39 |
| 2 | 8067.78 | 107.57 | 150.31 | 130.16 |
| 3 | 8015.57 | 106.87 | 133.03 | 129.64 |
| 4 | 7273.17 | 96.98 | 141.91 | 132.23 |
| 5 | 8286.20 | 110.24 | 150.52 | 126.72 |
| Average | 7875.92 | 105.01 | 141.72 | 127.63 |
| Standard deviation | 383.46 | 5.11 | 8.74 | 5.01 |

**Table 2 Compression test for protection plates of different thicknesses**

| Serial number | Compressive strength (MPa) | | |
|---|---|---|---|
| | 3 mm sheet material | 2 mm sheet material | 0.8 mm sheet material |
| 1 | 83.74 | 166.02 | 133.19 |
| 2 | 83.91 | 177.34 | 124.68 |
| 3 | 84.13 | 171.78 | 133.99 |
| 4 | 84.69 | 153.86 | 154.05 |
| 5 | 84.61 | 167.63 | 122.91 |
| 6 | 85.47 | 136.05 | 133.71 |
| 7 | 85.95 | 175.54 | 128.99 |
| 8 | 84.49 | 166.40 | 99.25 |
| 9 | 85.61 | 154.28 | 152.93 |
| 10 | 85.56 | 176.49 | - |
| Average | 84.22 | 165.54 | 131.52 |
| Standard deviation | 0.42 | 13.02 | 15.45 |

**Table 3 Flexure test for protection plates of different thicknesses**

| Serial number | Flexure strength (MPa) | | |
|---|---|---|---|
| | 3 mm sheet material | 2 mm sheet material | 0.7 mm sheet material |
| Span | 48 mm | 32 mm | 12 mm |
| 1 | 194.56 | 205.16 | 409.64 |
| 2 | 202.92 | 213.53 | 386.62 |
| 3 | 179.18 | 199.12 | 294.71 |
| 4 | 182.51 | 206.87 | 270.57 |
| 5 | 193.07 | 199.02 | 289.38 |
| 6 | 191.84 | 242.03 | 284.79 |
| 7 | 186.25 | 200.38 | 290.59 |
| 8 | 188.25 | 218.99 | 271.47 |
| 9 | 196.04 | 189.23 | 381.78 |
| 10 | | 208.67 | 377.86 |
| Average | 190.51 | 208.30 | 325.74 |
| Standard deviation | 6.87 | 14.48 | 55.57 |

**Table 4 Short beam shear test for protection plates of different thicknesses**

| Serial number | 3 mm sheet material (span 12 mm) | | 2 mm sheet material (span 8 mm) | |
|---|---|---|---|---|
| | Maximum force (N) | Shear strength (MPa) | Maximum force (N) | Shear strength (MPa) |
| 1 | 474.12 | 2.33 | 375.87 | 23.49 |
| 2 | 479.32 | 2.33 | 280.14 | 17.51 |
| 3 | 403.36 | 2.34 | 287.46 | 17.97 |
| 4 | 464.32 | 2.35 | 297.60 | 18.60 |
| 5 | 440.18 | 2.35 | 302.00 | 18.88 |
| 6 | 442.98 | 2.37 | 310.98 | 19.44 |
| 7 | 447.58 | 2.39 | 309.42 | 19.34 |
| 8 | 368.74 | 2.35 | 311.45 | 19.47 |
| 9 | 514.51 | 2.38 | 346.08 | 21.63 |
| 10 | 428.17 | 2.38 | | |
| Average | 446.328 | 2.35 | 313.45 | 19.59 |
| Standard deviation | 40.93 | 0.02 | 29.9 | 1.87 |

**Table 5 Impact test for protection plates of different thicknesses**

| Serial number | Impact strength (KJ/m²) | |
|---|---|---|
| | 3 mm sheet material | 2 mm sheet material |
| 1 | 67.69 | 45.3 |
| 2 | 70.23 | 48.5 |
| 3 | 63.07 | 42.2 |
| 4 | 77.60 | 46.2 |
| 5 | 67.60 | 51.1 |
| 6 | 68.22 | 43.9 |
| 7 | 71.29 | 41.4 |
| 8 | 61.34 | 50 |
| 9 | | 51.1 |
| 10 | | 46.3 |
| Average | 68.38 | 46.6 |
| Standard deviation | 5.01 | 3.5 |

In addition, the 3 mm-thick protection plate is subjected to a hardness test, showing that the Shore D hardness is 87 and the Brinell hardness is 46.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery, **characterized in that** the battery comprises:
a battery cell (6), wherein a pressure relief mechanism (65) is disposed on a first wall of the battery cell (6); and
a protection plate (8), wherein the protection plate (8) is disposed opposite to the pressure relief mechanism (65), and the protection plate (8) is a polymer-based composite fiberboard.

2. The battery according to claim 1, wherein the polymer-based composite fiberboard is a fiber-reinforced resin composite board.

3. The battery according to claim 1 or 2, **characterized in that** the battery cell (6) is accommodated in a box (20), and the first wall is a wall of the battery cell (6), the wall being close to a top cap (201) of the box (20) and disposed opposite to the top cap (201).

4. The battery according to claim 3, **characterized in that** the protection plate (8) is integrated with the top cap (201).

5. The battery according to claim 3, **characterized in that** the protection plate (8) is disposed between the top cap (201) and the first wall.

6. The battery according to claim 5, **characterized in that** the protection plate (8) is identical to the top cap (201) in dimensions.

7. The battery according to claim 5, **characterized in that** the protection plate (8) is smaller than the top cap (201) in dimensions.

8. The battery according to claim 5, **characterized in that** the protection plate (8) is in a strip shape, and a projection of the protection plate (8) on the first wall covers the pressure relief mechanism (65).

9. The battery according to any one of claims 6 to 8, **characterized in that** the protection plate (8) is connected to the top cap (201) by a bolt or adhesive.

10. The battery according to claim 1 or 2, **characterized in that** the battery cell (6) is accommodated in a box (20), and the first wall is a wall of the battery cell (6), the wall being close to a bottom wall (202) of the box (20) and disposed opposite to the bottom wall (202).

11. The battery according to claim 10, **characterized in that** the protection plate (8) is integrated with the bottom wall (202) of the box (20).

12. The battery according to claim 10, **characterized in that** the protection plate (8) is disposed between the bottom wall (202) and the first wall.

13. The battery according to claim 12, **characterized in that** a thermal management component (66) is disposed between the protection plate (8) and the first wall, and the thermal management component (66) is configured to accommodate a fluid to regulate temperature for the battery cell (6).

14. The battery according to claim 13, **characterized in that** the thermal management component (66) comprises a fragile region (661) disposed opposite to the pressure relief mechanism (65), and the fragile region (661) is configured to be broken by emissions of the battery cell (6) when the pressure relief mechanism (65) is actuated, so as to let the emissions pass through the fragile region (661).

15. The battery according to claim 5 or 12, **characterized in that** a heat insulation component (67) is disposed between the protection plate (8) and the box (20).

16. The battery according to claim 15, **characterized in that** the heat insulation component (67) is an air interlayer.

17. The battery according to any one of claims 1 to 16, **characterized in that** the protection plate (8) comprises a plurality of fiber-reinforced resin layers (81), and each of the fiber-reinforced resin layers (81) is compounded of a fiber material and a resin material.

18. The battery according to claim 17, **characterized in that** the resin material is silicon-based aerogel modified resin or high-temperature-resistant flame-retardant resin.

19. The battery according to claim 17, wherein the fiber material is at least one of glass fiber, ceramic fiber, carbon fiber, quartz fiber, high silica fiber, aluminum silicate fiber, mullite fiber, silicon carbide fiber, silicon nitride fiber, alumina fiber, boron nitride fiber, basalt fiber, brucite fiber, attapulgite fiber, boron fiber, carbon nanotube fiber, aramid fiber, polyimide fiber, ultra-high molecular weight polyethylene fiber, and other fibers.

20. The battery according to claim 19, **characterized in that** the fiber material is a ceramic fiber material.

21. The battery according to claim 20, **characterized in that** the ceramic fiber material is silicon oxide or aluminum oxide.

22. The battery according to any one of claims 17 to 21, **characterized in that** a thickness of the fiber material is 6 µm to 100 µm.

23. The battery according to any one of claims 1 to 22, **characterized in that** a thickness of the protection plate (8) is 0.2 mm to 5 mm.

24. An electrical device, **characterized in that** the electrical device comprises the battery (2) according to any one of claims 1 to 23, and the battery (2) is configured to provide electrical energy.
